# EUROPEAN PATENT APPLICATION

(11) **EP 4 474 229 A1**
(43) Date of publication of application: **11.12.2024**
(21) Application number: 24179769.5
(22) Date of filing: 04.06.2024
(51) Int. Cl.: B60S 1/50, B29C 45/00, B65D 6/00

(54) **CONTAINER OF A LIQUID MIXTURE FOR SUPPLYING THE WINDSCREEN WIPERS OF A MOTOR VEHICLE AND METHOD FOR MAKING SUCH A CONTAINER**

(30) Priority: 09.06.2023 IT 202300011814
(71) Applicant: LINEA 3 S.r.l., 60022 Castelfidardo (AN) (IT)
(72) Inventor: CAPONI, FIORENZO, Castelfidardo (AN) (IT)
(74) Representative: Dall'Olio, Christian

(57) **Abstract**

A container of a liquid mixture for supplying windscreen wipers of a motor vehicle, comprising: a shell (2); a cover (3), provided with a mouth (4) for filling the container (1) with the mixture; with the internal part of the edge (7A) of the shell (2) forming first means, extending in a closed loop, and with the internal part (8A) of the edge (8) of the cover (3) forming second means, extending in a closed loop, coupling with the first means, with the external parts (7B, 8B) of the edges of the shell (2) and the cover (3), identifying in combination, consequently to the coupling, an annular assembly channel (15) containing plastic material (20), injected by moulding, for connecting the cover (3) to the shell (2) and for insulating the inside of the container (1) with respect to the outside environment.

## Description

The present invention concerns a container of a liquid mixture for supplying windscreen wipers of a motor vehicle and a method for realising the container.

A process is known for obtaining a container of the above-described type.

This process includes bringing a suitable plastic material to a temperature such as to soften it; the container is obtained by means of the known "blowing" technique. This technique does not enable containers to be obtained having special geometries, nor does it allow controlling the thickness thereof; further, deburring operations are required.

A further known process, for obtaining a container performing the above-mentioned functions, includes realising two shells made of a synthetic resin in a mould and thereafter transferring the shells into a second mould in which, using the "vibration" technique, the shells are welded in such a way as to obtain the container.

The above process has an effect on the manufacturing cost of the container.

GB 1,416,997 describes a container of a liquid mixture for supplying the windscreen wipers of a motor vehicle, comprising a cover and a shell, with the lower inner strip of the cover being coupled by friction with the upper outer strip of the shell.

EP 0950503 describes a hollow body comprising a half-shell and a cover the edges of which are conformed in such a way as to identify, following the flanking of the edges, a joining zone open towards the outside, into which thermoplastic material is injected to connect the half-shell and the cover.

The edges are flanked to one another, for which purpose it is necessary to provide means for stabilising the flanking thereof before and during the injection of the thermoplastic material.

EP 1433584 describes a method for realising a container of a mixture of liquids for supplying the windscreen wipers of a motor vehicle, with the container comprising: a shell the edge of which forms, in the outer part thereof, first means extending in a closed loop; a cover the edge of which forms, in the outer part thereof, second means extending in a closed loop.

The method includes: fitting the edge of the shell to the edge of the cover to define an annular assembly channel; providing a mould, containing the shell and the cover with the edges matching one another; injection of plastic material internally of the channel so as to connect the shell and the cover.

The aim of the invention is to provide a container of a liquid mixture for supplying windscreen wipers of motor vehicles formed in such a way as to enable a vast range of geometries with a reduction in manufacturing times of the container.

A further aim of the invention is to provide a container which, as well as satisfying the preceding advantage, is such as to maintain its characteristics for a time that is comparable to the life of motor vehicle on which it is installed.

A further aim of the invention is to describe a device of the above type, formed in such a way as to use, for the manufacture thereof, the technique of injection moulding.

A still further aim of the invention is to provide a method for obtaining a container of a liquid mixture for supplying windscreen wipers of motor vehicles with which, using the technique of injection moulding, the above-described container is obtained with a vast range of geometries with a reduction in manufacturing times with respect to the state of the art.

The above-mentioned advantages are obtained according to the contents of the claims.

Further characteristics of the invention will emerge from the following description, with reference to the appended tables of drawings, in which:

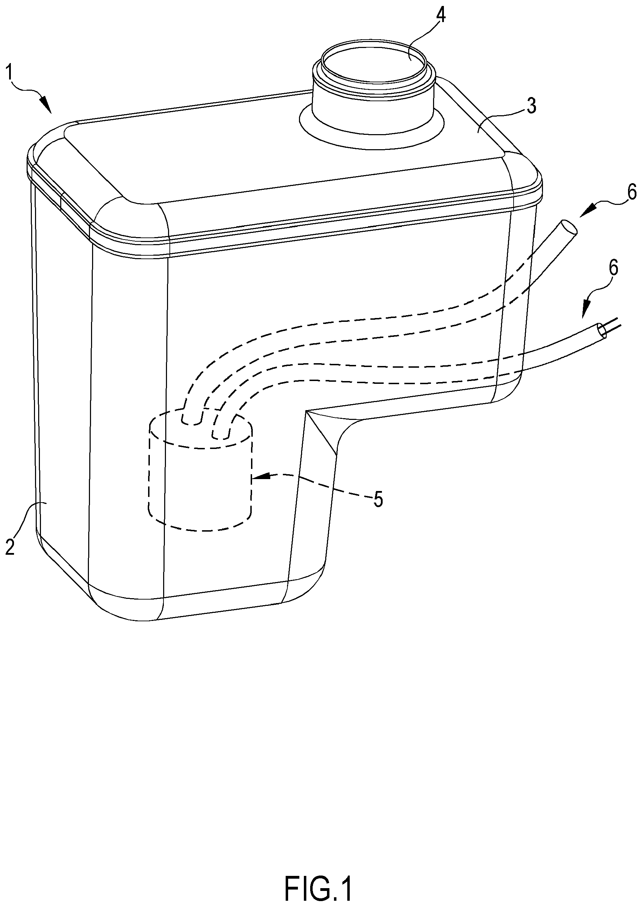

- figure 1 is a perspective view, with some parts represented schematically, of the container of the invention;
- figures 2, 3, 4 illustrate some technical-functional aspects relative to a first embodiment of a container, from which the steps of the method for actuating the container can be evinced;
- figures 5, 6, 7 illustrate some technical-functional aspects relative to a second embodiment of a container, from which the steps of the method for actuating the container can also be evinced.

With reference to the figures, reference numeral (1) denotes a container, comprising a shell (2), a cover (3), provided with a mouth (4) for filling the container: the closing cap of the mouth has not been illustrated.

A known liquid mixture is poured into the container using known means (5) (for example: electrically activated pump, electric cables for powering the pump and ducts (6) sealedly crossing a wall of the container), is directed towards the windscreen wipers of a motor vehicle.

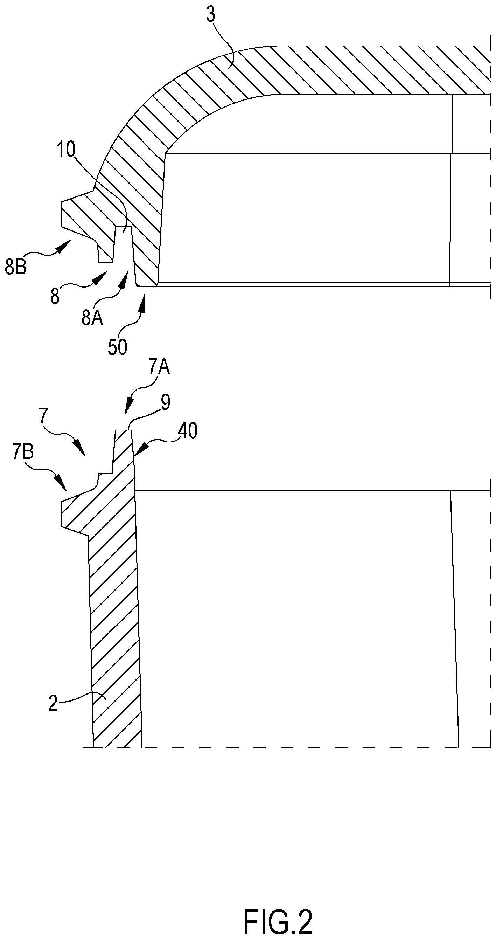

With reference to figures 2, 3, 4, reference numerals 7 and 8 respectively denote the edge of the shell (2) and the edge of the cover (3).

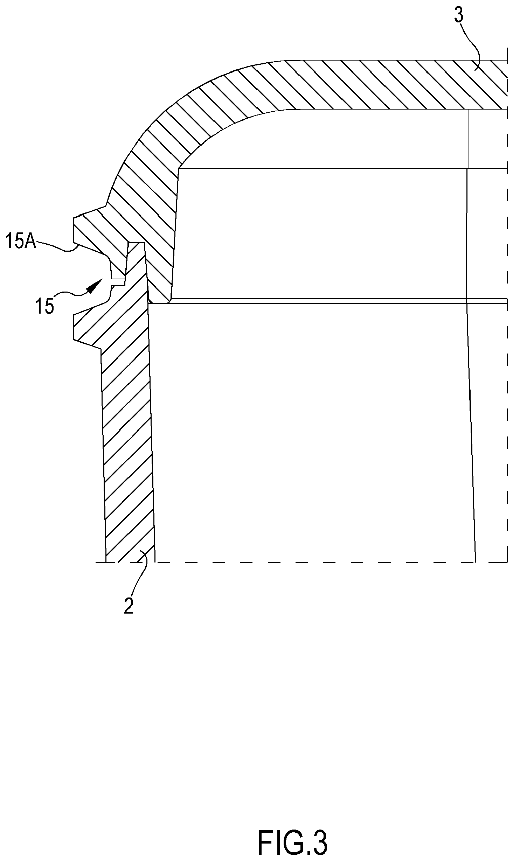

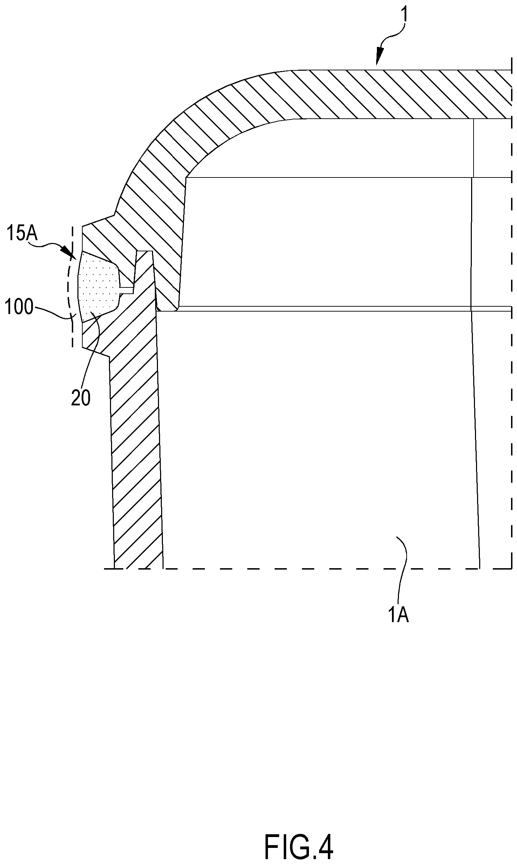

The internal part (7A) of the edge (7) of the shell (2) forms first means (40), extending in a closed loop; the internal part (8A) of the edge (8) of the cover (3) forms second means (50), extending in a closed loop; the first and second means mutually couple: this determines the insulation of the inside (1A) of the container (1) with respect to the outside environment (see figures 3, 4).

The external parts (7B, 8B) of the edges (7) (of the shell (2)) and (8) (of the cover (3) identify in combination, consequently to the coupling, an annular assembly channel (15), communicating with the outside environment via an annular window (15A).

Plastic material (20) is injected by moulding into the channel (15); this determines the mutual shell (2)-cover (3) connection and the maintenance of the insulation of the inside (1A) of the container with respect to the outside environment.

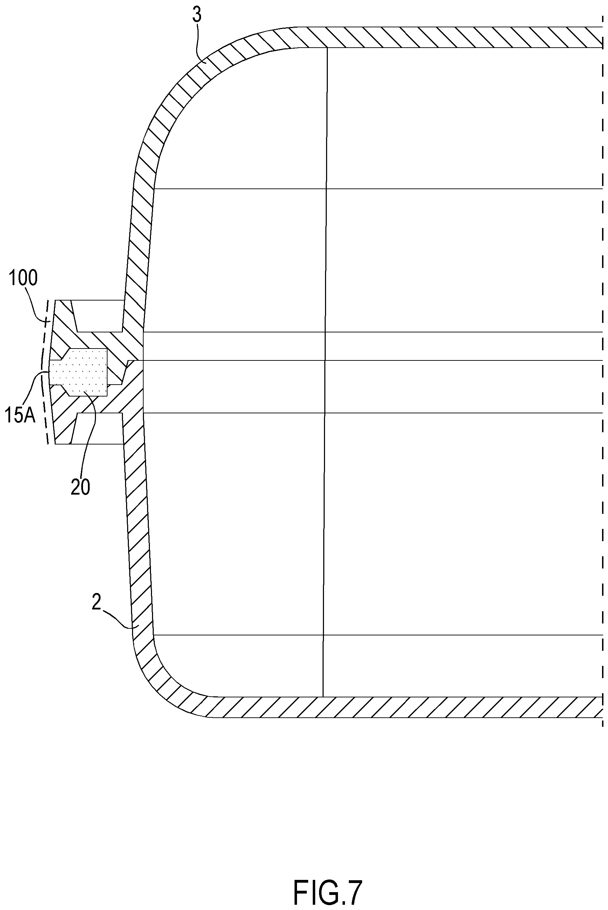

An abutment (100), positioned externally of the annular window (15A) (figures 4, 7) prevents leaking of plastic material from the annular window during the step of injection.

In a first embodiment, the first means comprise a first prominence (9), extending in a closed loop, and the second means comprise a first seat (10), also extending in a closed loop, destined to couplingly receive the first prominence (9) (see figures 2-4).

According to a second embodiment, the first means comprise: the first prominence (9) and a second seat (9A), extending in a closed loop in an internal position with respect to the first prominence, and the second means comprise the first seat (10) and a second prominence (10A) extending in a closed loop in an internal position with respect to the first seat.

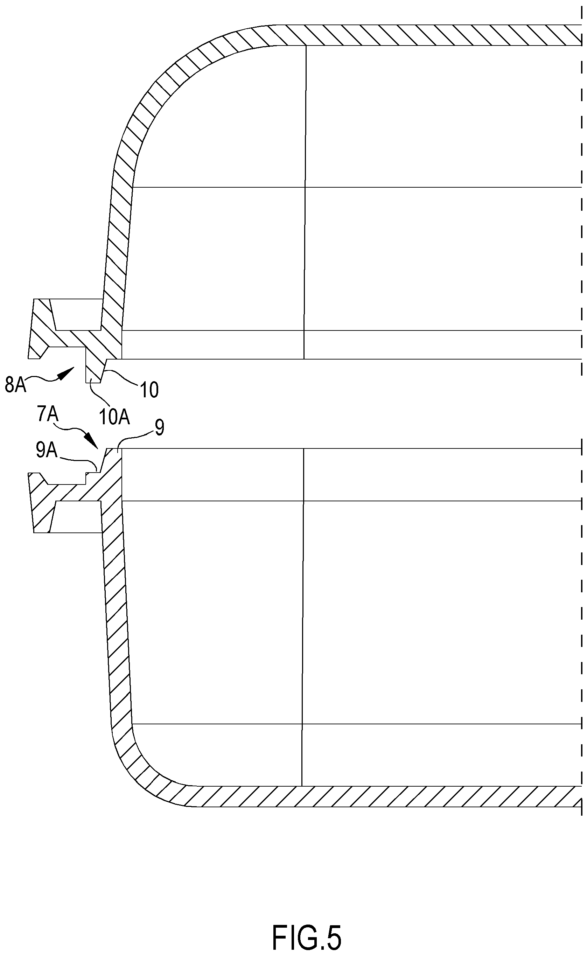

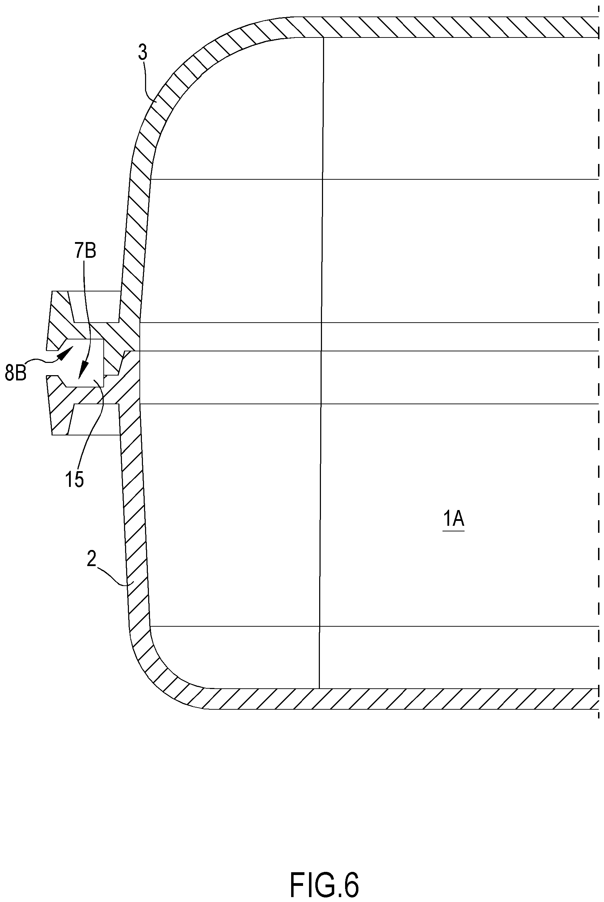

It follows that the mutual coupling between the first means involves the insertion of the first prominence (9) into the first seat (10), and the insertion of the second prominence (10A) into the second seat (9A) (see figures 5-7).

Definitively the technical situation described includes both the first and the second means extending in a closed loop in the internal parts (7A, 8A) respectively of the edges (7, 8) of the shell (2) of the cover (3), and the conformation of the external parts (7B, 8B) of the edges so as to define, consequently to the mutual coupling between the first and the second means, the annular assembly channel (15).

By way of example, two possible embodiments have been illustrated of the first and second means, and two possible profiles of the transversal section of the channel (15).

For example, with reference to figures 2-4, the transversal section of the channel (15) has an increasing height value from the inside towards the outside.

With reference to figures 5-7, the transversal section of the channel, as it proceeds from the inside towards the outside, has, in height, a constant value for a first portion, that decreases for a second portion, and is constant for the final portion. The profile of the transversal section of the channel (15) can be different with respect to the two embodiments considered.

The conformations of the first and second means are such as to determine, as a consequence of the coupling thereof, both the stabilising of the positioning of the shell (2) with respect to the cover (3), and the definition, with the external parts (7B, 8B) of the edges respectively of the shell (2) and the cover (3), of an annular assembly channel (15) into which plastic material 20 is injected.

The above-mentioned container is obtained with a method comprising:
- providing a shell (2), an edge (7) of which forms, in the internal part (7A) thereof, first means extending in a closed loop;
- providing a cover (3), provided with a mouth (4), an edge (8) of which forms, in the internal part thereof, second means extending in a closed loop;
- coupling of the first means (7A) of the shell (2) with the second means (8A) of the cover (3), with the external parts (7B, 8B) of the edges of the shell (2) and the cover (3) extending respectively in a closed loop so as to define, consequently to the coupling, an annular assembly channel (15):
- providing a mould containing the shell (2) and the cover (3) in the coupled configuration to define the annular assembly channel (15);
- injection of plastic material internally of the assembly channel so as to mutually connect the shell (2) and the cover (3) to define a corresponding container (1) the inside of which (1A) is insulated with respect to the outside environment.

Further, the providing of a mould containing the shell and cover in the coupled configuration comprises:
- providing a first die containing the shell and providing a second die containing the cover;
- a mutual positioning of the first die and the second die so as to arrange the shell and the cover in the coupled configuration.

The device of the invention is free of burrs and respects the thicknesses fixed during the design step, all with a saving in costs with respect to the prior art.

The method for obtaining the above-mentioned device is able to ensure assembly steps between the shell and the container, as well as the step of connecting between the shell and the container are extremely rapid and intuitive.

## Claims

1. A container of a liquid mixture for supplying windscreen wipers of a motor vehicle, comprising: a shell (2); a cover (3), provided with a mouth (4) for filling the container (1) with the mixture; pump means (5), located internally of the container, for supplying the windscreen wipers of a motor vehicle with the mixture, via a pipeline (6) sealedly crossing the wall of the container; **characterised in that** the internal part (7A) of the edge (7) of the shell (2) forms first means, extending in a closed loop, and the internal part (8A) of the edge (8) of the cover (3) forms second means, extending in a closed loop, coupling with the first means, and **in that** the external parts (7B, 8B) of the edges of the shell (2) and the cover (3) identify in combination, consequently to the coupling, an annular assembly channel (15) containing plastic material (20), injected by moulding, for connecting the cover (3) to the shell (2) and for insulating the inside (1A) of the container (1) with respect to the outside environment.

2. The container of claim 1, **characterised in that** the first means comprise a first prominence (9), extending in a closed loop, and **in that** the second means comprise a first seat (10), extending in a closed loop, destined to couplingly receive the first prominence (9).

3. The container of claim 2, **characterised in that** the first means comprise, externally with respect to the first prominence (9), a second seat (9A) extending in a closed loop, and **in that** the second means comprise, internally with respect to the first seat (10), a second prominence (10A), extending in a closed loop, destined to insert, following the coupling, in the second seat (9A).

4. The container of claim 1, **characterised in that** the plastic material fills the whole transversal section of the annular assembly channel (15).

5. The container of claim 1, **characterised in that** the outer portion (15A) of the annular assembly channel (15) communicates with the outside environment.

6. The container of claim 1, **characterised in that** the transversal section of the channel has an increasing height value of the inside towards the outside.

7. The container of claim 5, **characterised in that** the transversal section of the channel, as it proceeds from the inside towards the outside, has, in height, a constant value for a first portion, that decreases for a second portion, and is constant for the final portion.

8. A method for realising a container of a liquid mixture for supplying windscreen wipers of a motor vehicle, comprising:
- providing a shell (2), an edge (7) of which forms, in the internal part (7A) thereof, first means extending in a closed loop;
- providing a cover (3), provided with a mouth (4), an edge (8) of which forms, in the internal part thereof, second means extending in a closed loop;
- coupling of the first means of the shell (2) with the second means of the cover (3), with the external parts (7B, 8B) of the edges of the shell (2) and the cover (3), extending respectively in a closed loop so as to define, consequently to the coupling, an annular assembly channel (15), **characterised in that** it further comprises following operating steps:
- - providing a mould which includes providing a first die containing the shell and providing a second die containing the cover and a mutual positioning of the first die and the second die so as to arrange the shell and the cover in the coupled configuration,
- injection of plastic material internally of the assembly channel so as to mutually connect the shell (2) and the cover (3) to define a corresponding container (1) an inside of which (1A) is insulated with respect to the outside environment.
